Europäisches Patentamt

European Patent Office

Office européen des brevets

(11) Veröffentlichungsnummer: **0 250 768**

**A2**

(12) **EUROPÄISCHE PATENTANMELDUNG**

(21) Anmeldenummer: 87106337.6

(22) Anmeldetag: 02.05.87

(51) Int. Cl.³: **G 01 B 11/14**
**G 05 D 5/02**

(30) Priorität: 12.06.86 DE 3619412

(43) Veröffentlichungstag der Anmeldung:
07.01.88 Patentblatt 88/1

(84) Benannte Vertragsstaaten:
AT BE DE FR GB IT LU NL SE

(71) Anmelder: Hoesch Stahl Aktiengesellschaft
Rheinische Strasse 173
D-4600 Dortmund 1(DE)

(72) Erfinder: Tamler, Horst, Dr. rer. nat.
Markerbenhöhe 10
D-5810 Witten(DE)

(72) Erfinder: Tappe, Wilhelm, Dr.
Wulfskamp 23
D-4600 Dortmund 16(DE)

(72) Erfinder: Kopineck, Hermann-Josef, Prof. Dr. rer. nat.
Wildbannweg 36
D-4600 Dortmund 50(DE)

(74) Vertreter: Laskowski, Günter Dipl.-Ing.
i. Fa. Hoesch Aktiengesellschaft Eberhardstrasse 12
D-4600 Dortmund 1(DE)

(54) Verfahren und Vorrichtung zur Walzspaltmessung und Regelung.

(57) Bei dem Verfahren und der Vorrichtung zur Messung und Regelung des Walzspaltes an einem Walzgerüst wird der Walzspalt durch eine Lichtquelle quer zur Walzenachse oder auch parallel zur Walzenachse von einer Lichtquelle angestrahlt. Eine Kamera, speziell eine CCD-Zeilenkamera ist mit ihrer Optik auf den Walzspalt ausgerichtet und es wird in dieser Kamera der angestrahlte Teil des Spaltes in Richtung der Höhe oder Dicke des Spaltes in Bildpunkte zerlegt, die bei Belichtung durch eine elektrische Ladung erzeugen, wobei durch eine Ansteuerungselektronik die Bildpunkte nacheinander periodisch auf die Hell-Dunkelinformation abgefragt werden und die Summe der hellen oder dunklen Lichtpunkte als Information für die Größe des Walzspaltes und zur Steuerung der Walzspalteinstellung dient.

Fig.1

EP 0 250 768 A2

Croydon Printing Company Ltd.

Hoesch Stahl AG
Rheinische Straße 173, 4600 Dortmund 1

Verfahren und Vorrichtung zur Walzspaltmessung und Regelung

Die Erfindung betrifft ein Verfahren und eine Vorrichtung zur berührungslosen Walzspaltmessung und Regelung mit Hilfe von Lichtstrahlen.

Der Walzspalt wurde bisher nur indirekt mit Hilfe von Meßeinrichtungen bestimmt, die an den Lagerungen z. B. der Stützwalzen angebracht waren. Dabei wurden die Werte entsprechend den Auffederungen des Walzgestelles korrigiert, die aus der Messung des Walzdruckes durch Kraftmeßdosen ermittelbar waren. Die Bestimmung des Walzspaltes war nach diesem Verfahren ungenau.

Eine direkte und genauere Messung am Walzspalt war bisher besonders bei Warmwalzwerken wegen der hohen Temperatur und des Schmutzes nicht möglich.

Aus der DE-OS 24 04 763 ist eine Meßvorrichtung bekannt, die den Spalt zwischen den Zapfen der Arbeitswalzen mißt und die aus dem Spalt herausschwenkbar ist, um ungestört den Wechsel der Walzen vornehmen zu können. Nach dem elektromagnetischen Meßsystem nach der DE-OS 24 04 763 ist der Walzspalt nur bei Kaltwalzwerken mit hinreichender Genauigkeit bestimmbar, da das Gerät von Temperaturschwankungen, die z. B. vom strahlenden Walzgut in Warmwalzwerken entstehen, stark beeinflußt wird. Ein weiterer Nachteil dieses bekannten Gerätes besteht darin, daß sein Meßbereichh nur gering ist. Es ist deshalb nicht einsetzbar in reversierbaren Gerüsten, wie sie als Vorstraßen an Warmbandstraßen üblich sind.

In solchen Vorstraßen ändert sich die Einstellung des Walzspaltes z. B. innerhalb von 80 sec. 3 mal, wobei der Walzspalt in seiner Größe sich z. B. von 125 mm auf 60 mm verändert.

Es ist die Aufgabe der vorliegenden Erfindung, ein Meßverfahren und eine Vorrichtung zu erhalten, mit der äußerst genaue
und betriebssichere Bestimmungen des Walzspaltes auch an Vorstraßen für Warmwalzstraßen mit einem sehr großen Meßbereich
möglich sind.

Diese Aufgabe wird durch das im kennzeichnenden Teil des Anspruches 1 beschriebene Verfahren und die im kennzeichnenden
Teil des Anspruches 6 beschriebene Vorrichtung gelöst. Weiterbildungen des Verfahrens sind in den Unteransprüchen 2 bis
5 und Weiterbildungen der Vorrichtung in den Unteransprüchen
7 bis 13 beschrieben.

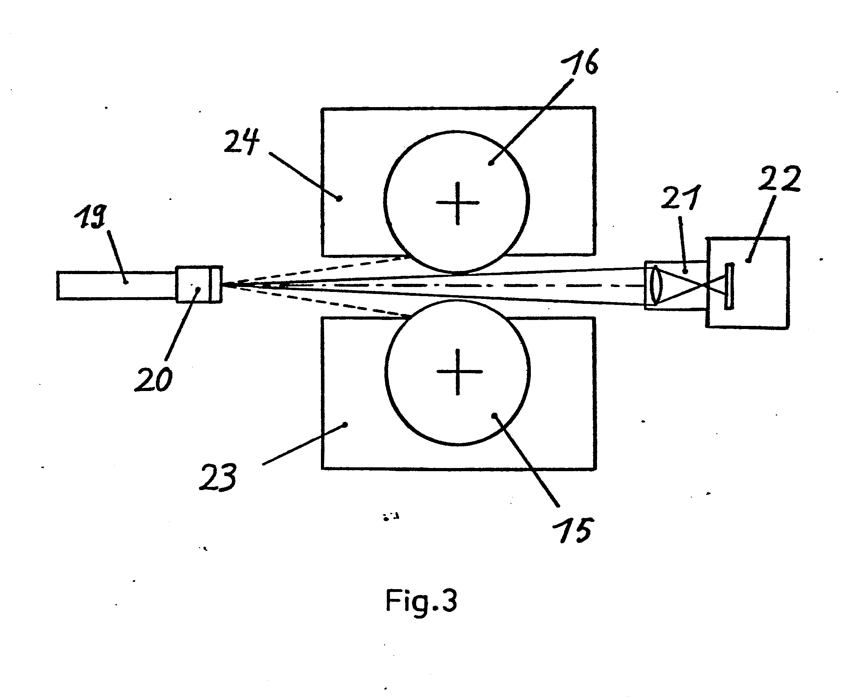

Die Erfindung wird mit Hilfe der Fig. 1 bis 6 näher erläutert.

Es zeigen die

Fig. 1 eine Anordnung nach dem Durchstrahlverfahren
    mit Leuchtstoffröhre,

Fig. 2 die Arbeitswalzen mit Referenzscheiben,

Fig. 3 eine Anordnung nach dem Durchstrahlverfahren mit
    Laser und Linienoptik,

Fig. 4 und Fig. 5
    Anordnung nach dem Auflicht-Verfahren,

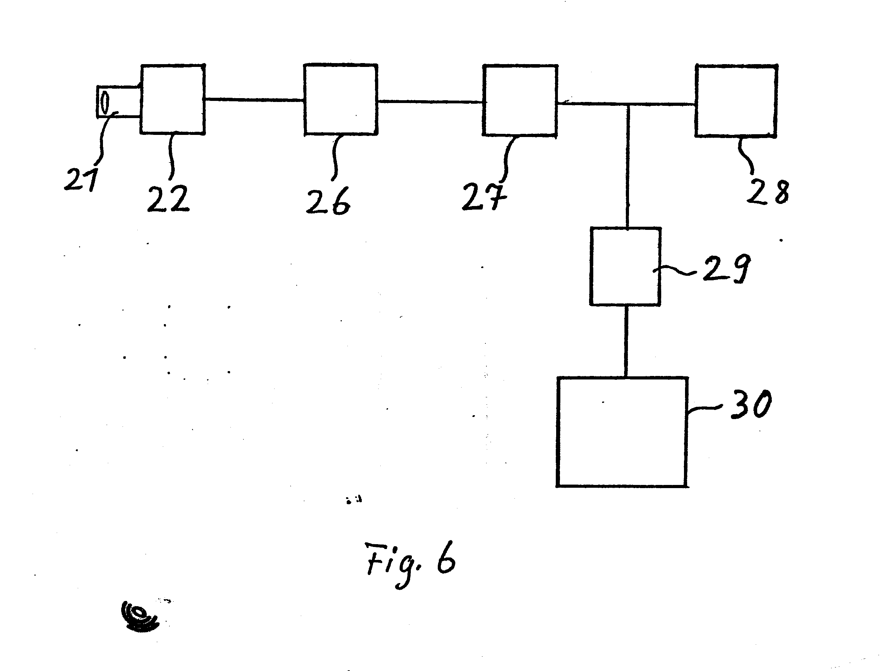

Fig. 6 ein Prinzipschaltbild der Auswertvorrichtung.

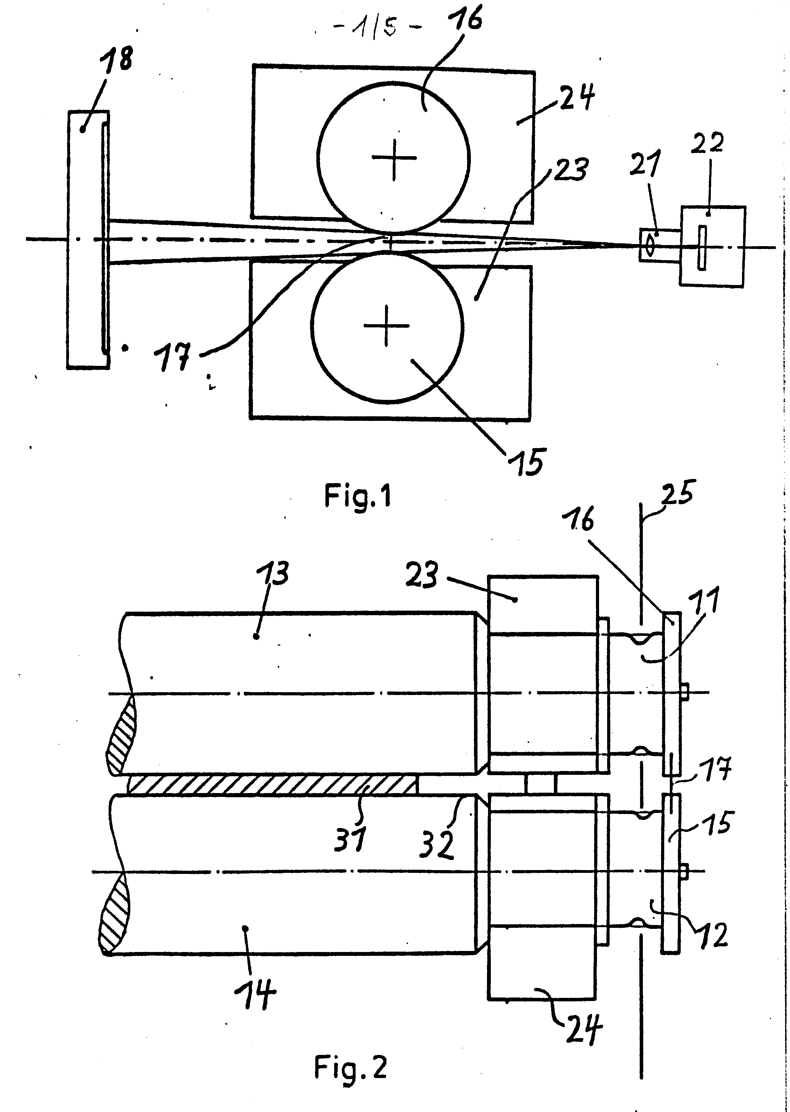

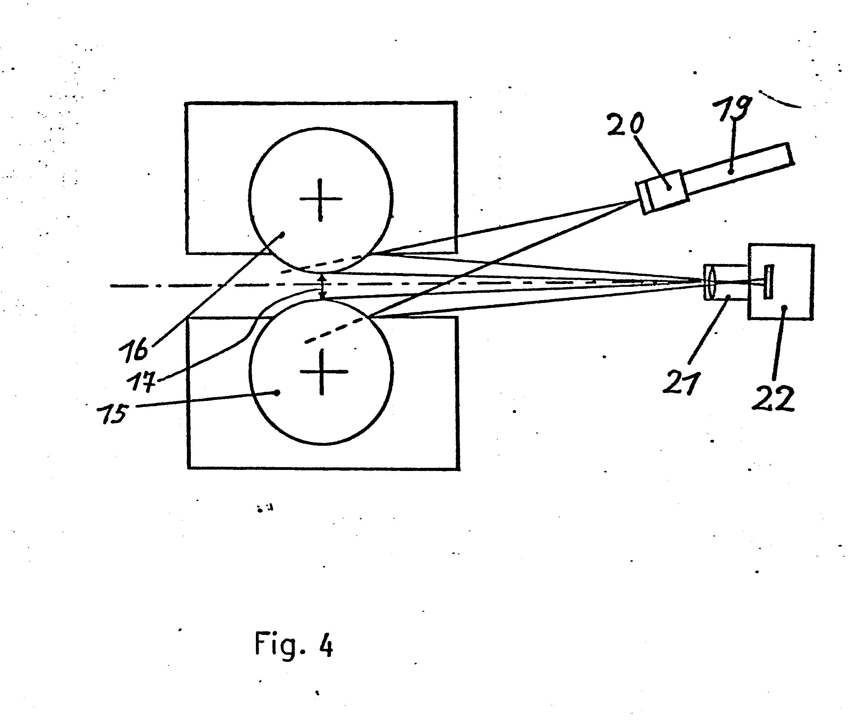

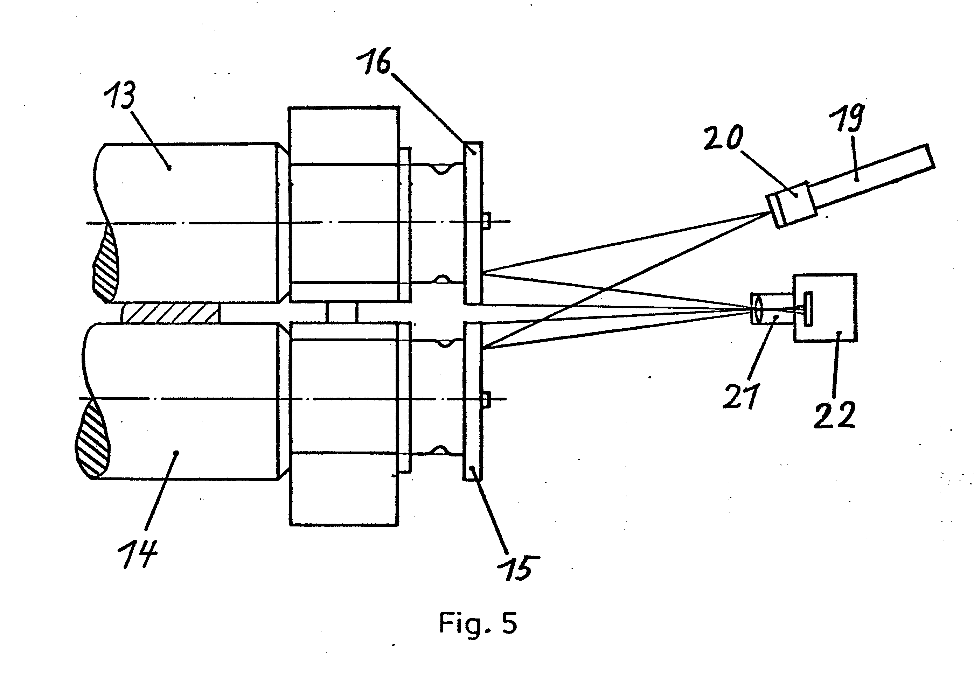

Bei Walzgerüsten in Warmwalzstraßen oder deren Vorstraßen ist es wegen des störenden Wassers und Zunders nicht möglich, am Rande der Arbeitswalzen den Walzspalt direkt zu messen. Deshalb sind an die bereits etwas geschützter liegenden Zapfen 11 und 12 der Arbeitswalzen 13 und 14 die Referenzscheiben 15 und 16 zentrisch angebaut. Die Referenzscheiben 15 und 16 bilden den zu messenden Spalt 17. Der Spalt 17 wird von der Leuchtstoffröhre 18 oder durch den Laser 19 mit Linienoptik 20 angeleuchtet. Die durch den Spalt 17 fallenden Strahlen treffen auf das Objektiv 21 der CCD-Zeilenkamera 22. Die Leuchtstoffröhre 18 oder der Laser 19 und die CCD-Zeilenkamera 22 sind am Gestell des Walzgerüstes befestigt und soweit von einander entfernt, daß ein Wechsel der Arbeitswalzen 13 und 14 ohne den Abbau dieser Teile möglich ist. Die Leuchtstoffröhre 18 oder der Laser 19 und die CCD-Zeilenkamera 22 werden vor Spritzwasser und Schmutz durch die Lagerblöcke 23 und 24 weitgehend geschützt. Es ist aber auch möglich, eine in Fig. 2 dargestellte zusätzliche Spritzwand 25 aufzustellen. Bei den in den Figuren 4 und 5 dargestellten Auflicht-Verfahren ist es von Vorteil, wenn die Referenzscheiben 15 und 16 mit einer hellen Farbe besprüht sind, damit ein möglichst starker Kontrast zu dem dunklen Spalt 17 entsteht.

Beim Durchstrahlverfahren wird der Spalt 17 in der CCD-Zeilenkamera 22 als helle Linie abgebildet, die an ihrem Anfang und Ende plötzlich in dunkle nicht beleuchtete Bereiche übergeht. Bei den Auflicht-Verfahren ist es genau umgekehrt.

Der Ablauf einer Messung wird insbesondere am Beispiel der Fig. 1 näher erläutert. Die Lichtstrahlen werden angenähert parallel von der Leuchtstoffröhre 18 zum Spalt 17 ausgesandt. Die durch den Spalt fallenden Lichtstrahlen werden durch das Objektiv 21 auf den Diodenzeilensensor der CCD-Zeilenkamera 22 geworfen. Das Objektiv verkleinert den Strahl des Spaltes z. B. im Verhältnis 1 : 10, so daß ein der Höhe des Spaltes 17 entsprechender schmaler aufrecht stehender Lichtstreifen

auf dem Diodenzeilensensor abgebildet wird, der entsprechend der Verkleinerung des Objektivs 21 nur 1/10 der Höhe des wirklichen Spaltes 17 hat.

Durch diesen Lichtstreifen werden die auf dem Diodenzeilensensor in einer Reihe senkrecht aufgereihten kleinen Photodioden belichtet. Es sind ca. 2000 miniaturisierte Photodioden zu einer Reihe, die eine Länge von ca. 20 mm hat, aufgereiht. Diese kleinen Photodioden oder lichtempfindlichen Elemente werden durch die in der Fig. 6 mit 26 bezeichnete Ansteuerungselektronik periodisch der Reihe nach angesteuert und es wird die Hell- oder Dunkelinformation abgefragt. In der Zähleinrichtung 27 wird ausgezählt, wieviel aufeinander folgende lichtempflindliche Elemente in der Reihe belichtet sind. Wenn zum Beispiel 1000 lichtempfindliche Elemente belichtet sind, so haben diese eine Länge von 10 mm. Wegen der 1 : 10 verkleinernden Optik hat der Walzspalt dann eine Dicke von 100 mm.

Es werden bei der Hell- Dunkelabfrage nur Werte als hell gezählt, die oberhalb eines vorgegebenen Schwellwertes liegen, so daß kleinere Störsignale, die durch Streulicht aus z. B. Reflexionen oder Beugung der Strahlen entstehen, unterdrückt werden.

Die Größe des Spaltes wird in der Anzeigevorrichtung 28 dem Bedienungspersonal angezeigt oder auch zusätzlich in einen Vergleicher 29 gegeben, wo dieser mit einem vorgegebenen Sollwert des Walzspaltes verglichen wird. Eine eventuell sich ergebende Differenz wird als Eingangssignal der Steuervorrichtung 30 für das Walzenanstellungssystem zugeführt, so daß eine selbsttätige sehr genaue Regelung des vorgegebenen Walzspaltes erhalten wird.

Wenn die Referenzscheiben 15 und 16 genau den gleichen Durchmesser der Arbeitswalzen 13 und 14 haben und beim Nachschleifen der Arbeitswalzen mit abgeschliffen werden, so stimmt deren Spalt mit dem Walzspalt überein. Es ist aber auch möglich, daß Referenzscheiben von kleinerem Durchmesser genommen werden, dann muß vom erhaltenen Wert des Spaltes der Referenzscheiben ein Wert abgezogen werden, der sich ergibt, wenn der Walzspalt durch Gegeneinanderfahren der Arbeitswalzen zu Null gemacht wird.

In genau der gleichen Weise wird vorgegangen, wenn der messende Lichtstrahl zwischen den Walzenzapfen hindurchgestrahlt wird. Referenzscheiben sind auch bei Warmwalzwerken nicht notwendig, wenn z. B. die Zapfen 11 und 12 noch aus den Lagerblöcken 23 und 24 herausragen.

Bei Kaltwalzwerken ist eine Messung auch direkt neben dem Werkstück 31 an der Kante 32 möglich.

Der Vorteil der Erfindung besteht besonders auch darin, daß ein sehr großer Meßbereich mit einer einzelnen Kamera sehr genau gemessen werden kann. Der Meßbereich kann selbstverständlich durch die Kombination von 2 Kameras noch erweitert werden. Es können auch bei entsprechender Auswerteinrichtung nur die Randbereiche des Spaltes beleuchtet werden und der in Bezug auf die Höhe des Spaltes in der Mitte liegende Bereich kann unbeleuchtet bleiben oder bei der Auswertung unberücksichtigt bleiben.

Um Beschädigungen beim Walzenwechsel zu vermeiden, ist es von Vorteil, wenn die Referenzscheiben leicht abschraubbar an den Stirnseiten der Zapfen befestigt werden. Die Erfindung ist auch mit nicht sichtbarem, z. B. infraroten Licht durchführbar.

-6- 0250768

11) Zapfen
12)
13) Arbeitswalzen
14)
15) Referenzscheiben
16)
17 Spalt
18 Leuchtstoffröhre
19 Laser
20 Linienoptik
21 Objektiv
22 CCD-Zeilenkamera
23) Lagerblöcke
24)
25 Spritzwand
26 Ansteuerungselektronik
27 Zähleinrichtung
28 Anzeigegerät
29 Vergleicher
30 Steuervorrichtung
31 Werkstück

Hoesch Stahl AG
Rheinische Straße 173, 4600 Dortmund 1

Patentansprüche

1. Verfahren zur Messung und Regelung des Walzspaltes an
   einem Walzgerüst, dadurch gekennzeichnet, daß ein
   zwischen den Arbeitswalzen (13, 14), deren zapfenartigen
   Verlängerungen (11, 12) oder an letzteren zentrisch befestigter sich mitdrehender außen runder Teile (15, 16)
   gebildeter Spalt (17) durch sichtbares oder unsichtbares
   Licht angestrahlt wird und der Spalt (17) und seine unmittelbare Umgebung von einer elektrischen Kamera (22)
   aufgenommen wird, in der der angestrahlte Teil in Richtung der Höhe oder Dicke des Spaltes (17) in Bildpunkte
   zerlegt wird, die bei Belichtung eine elektrische Ladung
   erzeugen oder einen elektrischen Strom abgeben, wobei
   durch eine Ansteuerungselektronik (26) die Bildpunkte
   nacheinander periodisch auf die Hell-Dunkelinformation
   abgefragt werden und bei der Bildung von Reihen mit der
   gleichen Information, die Reihe zur Weiterverarbeitung
   ausgewählt wird, die frei von Informationen aus Bildpunkten ist, die am Rande des von der Kamera (22) erfaßten
   Bildes liegen und die hellen oder dunklen Bildpunkte der
   ausgewählten Reihe summiert werden und ein der Größe der
   Summe linear proportionales Längensignal gebildet wird,
   das unter Abzug eines bei Berührung der Arbeitswalzen
   (13, 14) verbleibenden Restspaltes als Walzspalt in einem
   Anzeigegerät (28) dem Bedienungspersonal angezeigt wird
   oder als Eingangssignal einer automatischen Walzspaltregelvorrichtung (30) zugeführt wird.

2. Verfahren nach Anspruch 1, dadurch gekennzeichnet, daß der Spalt (17) in Walzrichtung gesehen von der einen Seite des Walzgerüstes angestrahlt wird und seine Abbildung auf der gegenüberliegenden Seite des Walzgerüstes von der Kamera (22) aufgenommen wird.

3. Verfahren nach Anspruch 1, dadurch gekennzeichnet, daß der Spalt (17) in Walzrichtung gesehen von der gleichen Seite angestrahlt und von der Kamera (22) aufgenommen wird.

4. Verfahren nach Anspruch 1, dadurch gekennzeichnet, daß der Spalt (17) an der Stirn- oder Lagerungsseite der Arbeitswalzen (13, 14) angestrahlt und von der Kamera (22) aufgenommen wird.

5. Verfahren nach den Ansprüchen 1 bis 4, dadurch gekennzeichnet, daß der Spalt (17) mit dem Licht eines Lasers (19) angestrahlt wird.

6. Vorrichtung zur Messung und Regelung der Dicke eines Walzspaltes nach dem Verfahren nach den Ansprüchen 1 bis 5, dadurch gekennzeichnet, daß diese aus einer Strahlungsquelle (18, 19), einer Kamera (22), einer Ansteuerungselektronik (26), einer Zähleinrichtung (27) mit Vergleicher, einem Anzeigegerät (28) oder einer Regelvorrichtung (30) für das Walzenanstellungssystem besteht.

7. Vorrichtung nach Anspruch 6, dadurch gekennzeichnet, daß an die Zapfen (11, 12) an den Stirnseiten der Arbeitswalzen (13, 14) je eine Referenzscheibe (15, 16) zentrisch angebaut ist und die Strahlungsquelle (18, 19) und die Kamera (22) auf den zwischen den Referenzscheiben befindlichen Spalt (17) ausgerichtet sind.

8. Vorrichtung nach den Ansprüchen 6 und 7, dadurch gekennzeichnet, daß die Referenzscheiben (15, 16) an die Zapfen der Arbeitswalzen (13, 14) eines Warmwalzwerkes oder eines vor diesem befindlichen Vorgerüstes angebaut sind.

9. Vorrichtung nach den Ansprüchen 6 bis 8, dadurch gekennzeichnet, daß die Kamera (22) und die Lichtquelle (18, 19) an sich gegenüberliegenden Seiten des Walzgerüstes befestigt sind.

10. Vorrichtung nach den Ansprüchen 6 bis 8, dadurch gekennzeichnet, daß die Kamera (22) und die Lichtquelle (18, 19) an der gleichen Seite des Walzgerüstes befestigt sind.

11. Vorrichtung nach den Ansprüchen 6 bis 8, dadurch gekennzeichnet, daß die Lichtquelle (18, 19) und die Kamera (22) an einer Stirnseite des Walzgerüstes befestigt sind und auf den an der Stirnseite sichtbaren Spalt (17) der Zapfen der Arbeitswalzen oder der Referenzscheiben (15, 16) gerichtet sind.

12. Vorrichtung nach den Ansprüchen 6 bis 11, dadurch gekennzeichnet, daß die Lichtquelle ein Laser (19) mit vorgeschalteter Linienoptik (20) ist.

13. Vorrichtung nach den Ansprüchen 6 bis 12, dadurch gekennzeichnet, daß die Kamera (22) eine CCD-Zeilenkamera ist.

0250768

Fig.1

Fig.2

Fig.3

Fig. 4

Fig. 5

Fig. 6